(19) **Europäisches Patentamt / European Patent Office / Office européen des brevets**

(11) **EP 2 281 109 B1**

(12) **FASCICULE DE BREVET EUROPEEN**

| | |
|---|---|
| (45) Date de publication et mention de la délivrance du brevet: **02.01.2013 Bulletin 2013/01** | (51) Int Cl.: **F01D 15/10** (2006.01) **F02C 3/10** (2006.01) **F02C 7/275** (2006.01) **F02C 7/32** (2006.01) |
| (21) Numéro de dépôt: **09725475.9** | (86) Numéro de dépôt international: **PCT/EP2009/053408** |
| (22) Date de dépôt: **24.03.2009** | (87) Numéro de publication internationale: **WO 2009/118298 (01.10.2009 Gazette 2009/40)** |

(54) **TURBOMOTEUR COMPORTANT UNE MACHINE ELECTRIQUE REVERSIBLE**

TURBOMOTOR MIT EINER REVERSIBLEN ELEKTRISCHEN MASCHINE

TURBINE ENGINE INCLUDING A REVERSIBLE ELECTRIC MACHINE

| | |
|---|---|
| (84) Etats contractants désignés: **AT BE BG CH CY CZ DE DK EE ES FI FR GB GR HR HU IE IS IT LI LT LU LV MC MK MT NL NO PL PT RO SE SI SK TR** | • **FOS, Monique F-64110 Rontignon (FR)** • **FREALLE, Jean-Luc F-64000 Pau (FR)** • **SENGER, Gérald F-64160 Morlaas-Berlanne (FR)** |
| (30) Priorité: **25.03.2008 FR 0851890** | (74) Mandataire: **Milien, Jean-Baptiste Aurélien et al Cabinet Beau de Loménie 158, rue de l'Université 75340 Paris Cedex 07 (FR)** |
| (43) Date de publication de la demande: **09.02.2011 Bulletin 2011/06** | |
| (73) Titulaire: **Turbomeca 64510 Bordes (FR)** | (56) Documents cités: **EP-A- 1 712 761 EP-A- 1 731 735 US-A1- 2005 056 021** |
| (72) Inventeurs: • **BEDRINE, Olivier F-64290 Bosdarros (FR)** | |

**Description**

La présente invention concerne le domaine des turbines à gaz et notamment celui des turbomoteurs et des turbopropulseurs, pour des engins volants tels des hélicoptères, des avions et autre application probable de ces types de moteur.

La présente invention concerne plus particulièrement un turbomoteur, notamment pour un hélicoptère, comportant un générateur de gaz et une turbine libre entraînée en rotation par le flux de gaz généré par le générateur de gaz, le turbomoteur comprenant en outre une machine électrique réversible destinée à être couplée au générateur de gaz, ladite machine électrique réversible étant apte à mettre en rotation le générateur de gaz lors d'une phase de démarrage du turbomoteur.

Traditionnellement, le générateur de gaz comporte au moins un compresseur et une turbine couplés en rotation. Le principe de fonctionnement est le suivant : l'air frais entrant dans le turbomoteur est comprimé du fait de la rotation du compresseur avant d'être envoyé vers une chambre de combustion où il est mélangé à un carburant. Les gaz brûlés du fait de la combustion sont ensuite évacués à grande vitesse.

Il se produit alors une première détente dans la turbine du générateur de gaz, durant laquelle cette dernière extrait l'énergie nécessaire à l'entraînement du compresseur.

La turbine du générateur de gaz n'absorbe pas toute l'énergie cinétique des gaz brûlés et l'excédent d'énergie cinétique correspond au flux de gaz généré par le générateur de gaz.

Ce dernier fournit donc de l'énergie cinétique à la turbine libre de sorte qu'il se produit une seconde détente dans la turbine libre qui transforme cette énergie cinétique en énergie mécanique afin d'entraîner un organe récepteur, tel le rotor de l'hélicoptère.

Lors de la phase de démarrage du turbomoteur, il est nécessaire d'entraîner en rotation le générateur de gaz, c'est-à-dire entraîner en rotation le compresseur couplé à la turbine. Comme mentionné en préambule, c'est précisément l'un des rôles de la machine électrique réversible, connue par ailleurs (cf US 2005/0056021), qui est le plus souvent un moteur électrique apte à fonctionner de manière réversible en génératrice électrique.

L'entraînement en rotation du compresseur par la machine électrique réversible fonctionnant en moteur permet en effet de faire circuler de l'air dans le compresseur et donc d'amener de l'air comprimé dans la chambre de combustion afin d'initier la combustion.

Cette combustion produit alors le flux gazeux permettant d'entraîner la turbine en rotation, à la suite de quoi le compresseur est directement entraîné en rotation par la turbine, ce qui signifie que le générateur de gaz fonctionne de manière autonome, traduisant la fin de la phase de démarrage du turbomoteur.

Il est connu que les aéronefs, dans lesquels de tels turbomoteurs sont notamment destinés à être intégrés, comportent des appareillages électriques qu'il est nécessaire d'alimenter par de l'énergie électrique.

Par exemple, pour un hélicoptère il est nécessaire d'alimenter en énergie électrique les appareillages électriques qui l'équipent comme par exemple les commandes électriques, le chauffage, la climatisation, le treuil mécanique.

Jusqu'à présent, en vol, on utilisait la machine électrique réversible pour fournir de l'électricité aux appareillages électriques. Pour ce faire et comme le propose le document EP 1 712 761, la machine électrique fonctionnant cette fois-ci en génératrice électrique était entraînée en rotation par le générateur de gaz, l'énergie cinétique de rotation prélevée sur le générateur de gaz étant transformée en énergie électrique par ladite machine.

Pour un hélicoptère cependant, le prélèvement d'énergie cinétique sur le générateur de gaz comporte des inconvénients.

La variation, au cours du vol, de la puissance mécanique prélevée par la machine électrique sur le générateur de gaz se traduit par un déplacement de la ligne de fonctionnement du moteur dans le champ compresseur.

Ce déplacement correspond à une marge au pompage qu'il est nécessaire de provisionner, ce qui a pour conséquence :

- de pénaliser l'optimisation de la ligne de fonctionnement du moteur, en interdisant l'utilisation du compresseur à un taux de pression optimal ;
- de dégrader de ce fait les performances stabilisées, avec un impact sur la consommation spécifique.

Un but de la présente invention est de proposer un turbomoteur, notamment pour hélicoptère, remédiant aux inconvénients mentionnés ci-dessus.

L'invention atteint son but par le fait que la machine électrique réversible est en outre destinée à être couplée à la turbine libre après la phase de démarrage du turbomoteur afin de générer de l'énergie électrique.

Autrement dit, en vol, la turbine libre entraîne avantageusement en rotation la machine électrique réversible, fonctionnant en génératrice électrique, de telle sorte que l'énergie cinétique destinée à être transformée en énergie électrique est avantageusement prélevée sur la turbine libre.

Les inventeurs ont en effet constaté que le prélèvement d'une certaine quantité d'énergie cinétique sur la turbine libre affecte sensiblement moins le rendement du turbomoteur que de prélever cette même quantité d'énergie cinétique sur le générateur de gaz. Cela est dû à la configuration particulière du cycle thermodynamique d'un tel turbomoteur.

Il en résulte que le turbomoteur selon l'invention permet avantageusement de fournir de l'électricité sans trop pénaliser son rendement.

Par ailleurs, en vol, la pilotabilité de l'hélicoptère équipé du turbomoteur selon l'invention est largement moins affectée dans la mesure où les capacités d'accélération du générateur de gaz sont préservées.

De surcroît, selon l'invention, c'est la même machine électrique réversible qui permet de démarrer le générateur de gaz et de fournir de l'électricité.

Avantageusement, la machine électrique réversible est couplée à un arbre du générateur de gaz par l'intermédiaire de premiers moyens de couplage désactivables, ladite machine réversible est couplée à un arbre de la turbine libre par l'intermédiaire de deuxièmes moyens de couplage désactivables, et les premiers et deuxièmes moyens de couplage sont configurés de manière à ne pas être activés simultanément.

Par « moyens de couplage désactivables » on entend que lesdits moyens de couplage peuvent être dans une position activée dans laquelle les organes reliés auxdits moyens de couplage sont couplés, ou dans une position désactivée dans laquelle lesdits organes sont découplés, étant entendu que par "organe" on entend la machine électrique, le générateur de gaz et la turbine libre.

Selon l'invention, lorsque les premiers moyens de couplage sont activés, les deuxièmes moyens de couplage sont désactivés, c'est-à-dire que la machine électrique réversible est couplée au générateur de gaz tout en étant découplée de la turbine libre, tandis qu'à l'inverse, lorsque les deuxièmes moyens de couplage sont activés, les premiers moyens de couplage sont désactivés, c'est-à-dire que la machine électrique est couplée à la turbine libre tout en étant découplée du générateur de gaz.

Sans sortir du cadre de l'invention, on peut également prévoir une position intermédiaire dans laquelle les premiers et deuxièmes moyens de couplage sont désactivés en même temps.

Conformément à l'invention, la machine électrique réversible fonctionne en moteur électrique lorsque les premiers moyens de couplage sont activés, de manière à entraîner en rotation le générateur de gaz lors de la phase de démarrage du turbomoteur.

Corrélativement, la machine électrique réversible fonctionne en génératrice électrique lorsque les deuxièmes moyens de couplage sont activés, de manière à produire de l'électricité par le prélèvement d'énergie cinétique sur la turbine libre, et ce après la phase de démarrage du turbomoteur, c'est-à-dire essentiellement en vol.

Grâce au fait que les premiers et seconds moyens de couplage ne peuvent être activés simultanément, on évite l'apparition de la situation néfaste lors de laquelle la turbine libre entraîne en rotation le générateur de gaz.

Avantageusement, les premiers et/ou les deuxièmes moyens de couplage comprennent une roue libre.

Un intérêt de la roue libre est qu'elle ne nécessite pas d'être commandée électroniquement ou mécaniquement par un opérateur extérieur.

Une telle roue libre est généralement constituée d'un moyeu et d'une couronne périphérique montée rotative sur le moyeu. Le moyeu pouvant entraîner en rotation la couronne périphérique mais pas l'inverse. Aussi, le moyeu ne peut entraîner la couronne que lorsque le moyeu tourne dans un sens prédéterminé, que l'on appellera « sens d'engagement ». Dans le cas contraire, le moyeu et la couronne périphérique tournent librement l'un par rapport à l'autre.

En l'espèce, les moyens de couplage désactivables sont activés lorsque le moyeu de la roue libre entraîne en rotation la couronne périphérique, et, à l'inverse, les moyens de couplage désactivables sont désactivés lorsque le moyeu de la roue libre n'entraîne pas en rotation la couronne périphérique.

De préférence, les premiers moyens de couplage comprennent une première roue libre, les deuxièmes moyens de couplage comprennent une deuxième roue libre, et les première et deuxième roues libres sont montées en opposition.

Par "montées en opposition", on entend que la première roue libre peut transmettre un couple de rotation provenant de la machine électrique, alors que la deuxième roue libre peut transmettre un couple de rotation vers la machine électrique.

Avantageusement, les premiers et/ou les deuxièmes moyens de couplage comprennent en outre un réducteur.

Par réducteur, il faut entendre un ou plusieurs étages de réduction, comportant par exemple des trains d'engrenages. De tels réducteurs sont connus par ailleurs.

Comme le générateur de gaz et la turbine libre tournent généralement sensiblement plus vite que la machine électrique réversible, le réducteur permet d'adapter la vitesse de rotation de la machine électrique réversible aux vitesses du générateur de gaz et de la turbine libre.

Avantageusement, les premiers moyens de couplage comprennent un premier réducteur ayant un premier coefficient de réduction, tandis que les deuxièmes moyens de couplage comprennent un deuxième réducteur ayant un deuxième coefficient de réduction, et le rapport des premier et deuxième coefficients de réduction est inférieur à une première valeur limite.

De préférence, cette première valeur limite est choisie de manière que les première et deuxième roues libres ne soient pas engagées simultanément.

De préférence, cette première valeur limite est proportionnelle au rapport de la vitesse nominale du générateur de gaz sur la vitesse nominale de la turbine libre. De préférence, le coefficient de proportionnalité est strictement inférieur à 1.

Selon un autre mode de réalisation de l'invention, la machine électrique réversible est également apte à être couplée au générateur de gaz afin de générer de l'énergie électrique.

De préférence, la machine électrique réversible est apte à être couplée au générateur de gaz, après la phase de démarrage du turbomoteur, lorsque la turbine libre tourne à faible vitesse ou bien qu'elle est bloquée, de sorte que la machine électrique réversible, fonctionnant en génératrice électrique, fournisse avantageusement de l'énergie électrique en prélevant de l'énergie cinétique sur le générateur de gaz.

De manière avantageuse, la machine électrique réversible est apte à être couplée à l'arbre du générateur de gaz par des troisièmes moyens de couplage désactivables et les premiers, deuxièmes et troisièmes moyens de couplage sont configurés de manière que seul l'un desdits moyens de couplage soit activé à la fois.

Autrement dit, lorsque les troisièmes moyens de couplage sont activés, les premiers et deuxièmes moyens de couplage sont désactivés, c'est-à-dire que la machine électrique réversible est couplée au générateur de gaz uniquement via les troisièmes moyens de couplage, tout en étant découplée de la turbine libre.

De préférence, les troisièmes moyens de couplage sont distincts des premiers moyens de couplage.

Préférentiellement, les troisièmes moyens de couplage comprennent une troisième roue libre.

Avantageusement, les première et troisième roues libres sont montées en opposition.

Grâce à quoi les première et troisième roues libres ne peuvent être engagées simultanément.

De préférence mais non nécessairement, les troisièmes moyens de couplage comportent en outre un crabot.

Dans ce cas, le crabot permet d'activer ou désactiver les troisièmes moyens de couplage, tandis que la troisième roue libre facilite le crabotage et le décrabotage dans la mesure où ceux-ci se font à couple nul.

Selon une autre variante de réalisation, les troisièmes moyens de couplage comportent un coupleur hydraulique remplaçant le crabot et la troisième roue libre.

Lorsque le turbomoteur selon l'invention comporte trois roues libres, les troisièmes moyens de couplage comportent en outre de manière avantageuse un troisième réducteur ayant un troisième coefficient de réduction et le rapport des deuxième et troisième coefficients de réduction est supérieur à une seconde valeur limite.

Cette seconde valeur limite est choisie de telle sorte que le générateur de gaz n'entraîne pas en rotation la machine électrique réversible fonctionnant en génératrice pendant le vol.

De préférence, cette seconde valeur limite est proportionnelle au rapport de la vitesse nominale du générateur de gaz sur la vitesse nominale de la turbine libre.

De préférence, le coefficient de proportionnalité est strictement supérieur à 1.

L'invention sera mieux comprise et ses avantages apparaîtront mieux à la lecture de la description qui suit, de modes de réalisation indiqués à titre d'exemples non limitatifs. La description se réfère aux dessins annexés sur lesquels :

- la figure **1** représente une vue en coupe d'un turbomoteur selon l'invention ;
- la figure **2** représente schématiquement un premier mode de réalisation de l'invention dans lequel le turbomoteur comporte des premiers et deuxièmes moyens de couplage ;
- la figure **3** représente schématiquement un deuxième mode de réalisation de l'invention dans lequel le turbomoteur comporte des premiers, deuxièmes et troisièmes moyens de couplage ; et
- la figure **4** représente schématiquement une variante de réalisation du deuxième mode de réalisation de l'invention de la figure **3** pour lequel les troisièmes moyens de couplage comportent en outre un crabot.

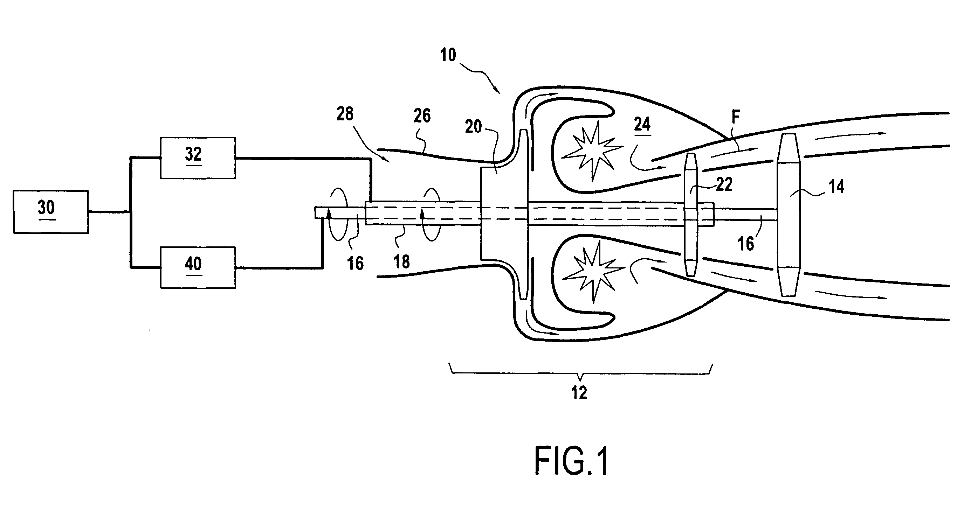

Sur la figure **1**, on a représenté de façon schématique un turbomoteur **10** conforme à un premier mode de réalisation de l'invention destiné notamment à entraîner en rotation un rotor d'un hélicoptère (non représenté ici), le turbomoteur **10** comportant un générateur de gaz **12** et une turbine libre **14** apte à être entraînée en rotation par un flux de gaz généré par le générateur de gaz **12**.

La turbine libre **14** est montée sur un arbre **16** qui transmet le mouvement de rotation à un organe récepteur tel un rotor principal de l'hélicoptère.

Le turbomoteur **10** représenté sur la figure **1** est du type à prise de mouvement avant avec renvoi par arbre coaxial. On pourrait très bien considérer, sans sortir du cadre de la présente invention, un turbomoteur à turbine libre du type à prise de mouvement avant avec renvoi par arbre extérieur ou bien un turbomoteur à turbine libre du type à prise de mouvement arrière.

Le générateur de gaz comporte un arbre rotatif **18** sur lequel sont montés un compresseur **20** et une turbine **22**, ainsi qu'une chambre de combustion **24** disposée axialement entre le compresseur **20** et la turbine dès lors que l'on considère le générateur de gaz **12** selon la direction axiale de l'arbre rotatif **18**.

Le turbomoteur **10** présente un carter **26** muni d'une entrée d'air **28** par laquelle l'air frais entre dans le générateur de gaz **12**.

Après son admission dans l'enceinte du générateur de gaz **12,** l'air frais est comprimé par le compresseur **20** qui le refoule vers l'entrée de la chambre de combustion **24** dans laquelle il est mélangé avec du carburant.

La combustion qui a lieu dans la chambre de combustion **24** provoque l'évacuation à grande vitesse des gaz brûlés vers la turbine **22,** ce qui a pour effet d'entraîner en rotation l'arbre **18** du générateur de gaz **12** et, par conséquent, le compresseur **20**.

La vitesse de rotation de l'arbre **18** du générateur de gaz **12** est déterminée par le débit de carburant entrant dans la chambre de combustion **24**.

Malgré l'extraction d'énergie cinétique par la turbine **22**, le flux de gaz sortant du générateur de gaz présente une énergie cinétique significative.

Comme on le comprend à l'aide de la figure **1**, le flux de gaz **F** est dirigé vers la turbine libre **14** ce qui a pour effet de provoquer une détente dans la turbine libre **14** conduisant à la mise en rotation de la roue de turbine et de l'arbre **16**.

Le turbomoteur **10** comporte en outre une machine électrique réversible **30** constituée en l'espèce d'un moteur électrique apte à fonctionner de manière réversible en génératrice électrique.

La machine électrique réversible **30** est couplée mécaniquement à l'arbre **18** du générateur de gaz **12** par des premiers moyens de couplage désactivables **32**.

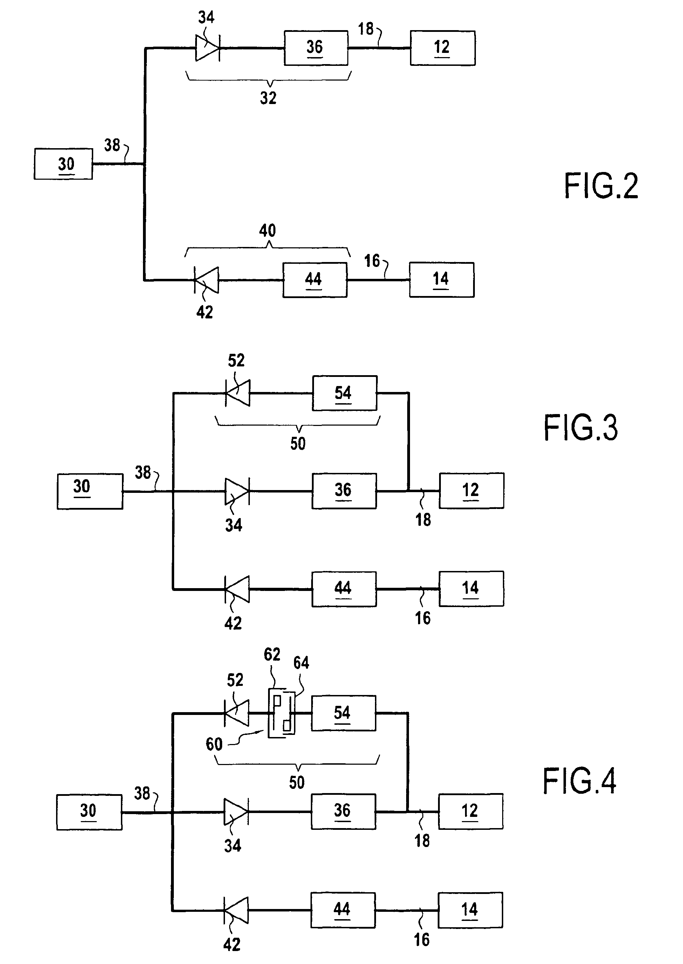

Plus précisément, comme on le voit sur la figure **2**, les premiers moyens de couplage désactivables **32** comprennent une première roue libre **34** et, de préférence un premier réducteur **36**, ayant un premier coefficient de réduction K1, disposé entre l'arbre **18** et la première roue libre **34.**

La première roue libre est montée de telle sorte que la rotation de l'arbre **38** de la machine électrique réversible **30** peut entraîner en rotation l'arbre **18** du générateur de gaz **12** lorsque la machine électrique réversible **30** fonctionne en moteur électrique (premiers moyens de couplage activés) mais qu'au contraire, la rotation de l'arbre **18** du générateur de gaz **12** ne peut pas entraîner en rotation l'arbre **38** de la machine électrique réversible **30** (premiers moyens de couplage désactivés).

Autrement dit, la première roue libre **34** ne peut transférer un couple de rotation que dans la machine électrique réversible **30** vers le générateur de gaz **12**, et pas l'inverse.

Ainsi, la rotation de l'arbre **38** de la machine électrique réversible **30** est apte à entraîner en rotation l'arbre **18** du générateur de gaz **12** afin de démarrer ce dernier. Lorsque le générateur de gaz **12** a démarré, la machine électrique réversible n'entraîne plus en rotation le générateur de gaz **12.**

De manière avantageuse, le premier coefficient de réduction K1 est choisi de manière que la vitesse de la machine électrique réversible soit adaptée à la plage de vitesse requise pour le démarrage du moteur.

Conformément à l'invention, la machine électrique réversible **30** est également apte à être couplée à la turbine libre **14**, avantageusement par le biais de deuxièmes moyens de couplage **40**, de telle manière que ladite machine électrique réversible, fonctionnant en génératrice électrique, soit apte à être entraînée en rotation par la turbine libre **14** afin de fournir de l'électricité.

Comme on le voit sur la figure **2**, les deuxièmes moyens de couplage **40** comprennent une deuxième roue libre **42,** similaire à la première roue libre **34**, reliée à l'arbre **38** de la machine électrique réversible.

Les deuxièmes moyens de couplage **40** comportent en outre un deuxième réducteur **44** disposé entre la deuxième roue libre **42** et un arbre **16** de la turbine libre.

Ce deuxième réducteur **44** a un deuxième coefficient de réduction K2 choisi de telle manière que la vitesse de la machine électrique réversible soit adaptée à la plage de vitesse requise pour permettre la fourniture d'électricité.

La deuxième roue libre **42** est en effet montée de telle sorte qu'elle peut transmettre un couple de rotation uniquement de l'arbre **16** de la turbine libre **14** vers l'arbre **38** de la machine électrique **30.**

Autrement dit, grâce à la deuxième roue libre, la machine électrique réversible **30** peut être entraînée par la turbine libre **14** (deuxièmes moyens de couplage activés) mais ne peut pas entraîner en rotation cette dernière (deuxièmes moyens de couplage désactivés).

Lorsque la turbine libre **14** entraîne en rotation la machine électrique réversible **30**, cette dernière fonctionne en génératrice électrique et produit de l'électricité.

Comme on le voit sur la figure **2**, les première et deuxième roues libres sont montées en opposition.

En l'espèce, elles présentent des sens d'engagement opposés.

Ainsi, lorsque la machine électrique réversible, fonctionnant en moteur, entraîne en rotation l'arbre **18** du générateur de gaz (première roue libre engagée, i.e. premiers moyens de couplage activés), la deuxième roue libre ne transmet pas le couple de rotation de la machine électrique réversible vers l'arbre **16** de la turbine libre **14** (deuxièmes moyens de couplage désactivés).

Inversement, lorsque l'arbre **16** de la turbine libre **14** entraîne en rotation l'arbre **38** de la machine électrique réversible **30** fonctionnant en génératrice électrique (deuxième roue libre engagée, i.e. deuxième moyens de couplage activés), on s'arrange pour que la première roue libre ne transmette pas le couple de rotation de l'arbre **38** de la machine électrique réversible vers l'arbre **18** du générateur de gaz (premiers moyens de couplage désactivés).

Comme on le constate sur la figure **2**, les première et deuxième roues libres sont toutes les deux reliées à l'arbre **38** de la machine électrique réversible **30.**

Pour éviter que la turbine libre **14** n'entraîne en rotation l'arbre **18** du générateur de gaz **12**, il faut que la première roue libre ne soit pas engagée.

Pour ce faire, les coefficients de réduction K1, K2 des premier et deuxième réducteurs sont par exemple mais non nécessairement choisis de la façon suivante :

$$\frac{K1}{K2} < \lambda_{min} * \frac{|100\%NG|}{|100\%NTL|}$$

Où:

-   100%NG est la vitesse de rotation nominale de l'arbre **18** du générateur de gaz **12** ;
-   100%NTL est la vitesse de rotation nominale de l'arbre **16** de la turbine libre **14** ; et
-   $\lambda_{min}$, coefficient de proportionnalité, est de préférence égal à la plus petite valeur du rapport :

$$\frac{NG(t)}{NTL(t)}, \forall t$$

Autrement dit, le rapport des premier et deuxième coefficients de réduction K1, K2 est inférieur à une première valeur limite L1 où :

$$L1 = \lambda_{\min} * \frac{|100\% NG|}{|100\% NTL|}$$

Pour cette première valeur limite L1, les inventeurs ont constaté que les premiers et deuxièmes moyens de couplage ne sont jamais activés simultanément lors du fonctionnement du turbomoteur.

A l'aide de la figure **3**, on va maintenant décrire un deuxième mode de réalisation de l'invention.

Le turbomoteur selon le deuxième mode de réalisation de l'invention diffère du premier mode de réalisation de la figure **2,** en ce que la machine électrique réversible **30** est également apte à être couplée à l'arbre **18** du générateur de gaz, en l'espèce par le biais de troisièmes moyens de couplage **50** désactivables aptes à transmettre un couple de rotation entre l'arbre **18** du générateur de gaz **12** et l'arbre **38** de la machine électrique réversible **30** fonctionnant en génératrice électrique afin qu'elle produise de l'électricité, avantageusement lorsque la turbine libre ne tourne pas suffisamment vite pour que la machine électrique réversible **30** puisse générer de l'électricité.

Par exemple, on s'arrange pour que les troisièmes moyens de couplage **50** soient activés lorsque la turbine libre **14** est bloquée, ou bien tourne à faible vitesse, notamment lorsque l'hélicoptère est au sol.

Dans ce cas, c'est donc le générateur de gaz **12** qui entraîne en rotation la machine électrique **30** afin de produire de l'électricité, étant souligné que le problème de la pilotabilité de l'hélicoptère, mentionné ci-dessus, ne se pose pas ici puisque l'hélicoptère est alors au sol.

Avantageusement, les premiers, deuxièmes et troisièmes moyens de couplage sont configurés de manière que seul l'un desdits moyens de couplage soit activé à la fois.

En l'espèce, lorsque les troisièmes moyens de couplage **50** sont activés, c'est-à-dire lorsque le générateur de gaz entraîne en rotation la machine électrique réversible fonctionnant en génératrice électrique, les premiers et deuxièmes moyens de couplage **32**, **40** sont désactivés.

Comme on le voit sur la figure **3**, les troisièmes moyens de couplage **50** comportent une troisième roue libre **52**, de préférence similaire à la première roue libre **34** ainsi qu'un troisième réducteur **54**, ayant un troisième coefficient de réduction K3, qui est disposé entre la troisième roue libre **52** et l'arbre **18** du générateur de gaz **12**.

En l'espèce, le principe de fonctionnement des troisièmes moyens de couplage **50** est similaire à celui des premiers et deuxièmes moyens de couplage.

Pour éviter que, en vol, le générateur de gaz **12** n'entraîne en rotation la machine électrique réversible **30** fonctionnant en génératrice, il convient de choisir les coefficients de réduction K2 et K3 de la façon suivante, en sus de la condition sur les coefficients de réductions K1 et K2 mentionnée ci-dessus :

$$\frac{K3}{K2} > \beta \max * \frac{|100\% NG|}{|100\% NTL|}$$

Où $\beta_{MAX}$, coefficient de proportionnalité, est de préférence égal à la plus grande valeur du rapport :

$$\frac{NG(t)}{NTL(t)}, \forall t$$

Autrement dit, le rapport des troisième et deuxième coefficients de réduction K3, K2 est supérieur à une seconde valeur limite L2 où :

$$L2 = \beta \max * \frac{|100\% NG|}{|100\% NTL|}$$

Pour cette deuxième valeur limite L2, les inventeurs ont constaté que le générateur de gaz ne pourra jamais entrainer la machine électrique réversible pendant la phase de vol.

Selon une variante de réalisation du deuxième mode de réalisation de l'invention, représentée sur la figure **4,** les troisièmes moyens de couplage **50** comportent en outre un crabot **60**, qui est de préférence disposé entre la troisième roue libre **52** et le troisième réducteur **54**.

Plus précisément, le crabot **60** comporte une première partie **62** fixée à une couronne périphérique de la troisième roue libre **52** et une seconde partie **64** fixée au troisième réducteur **54**.

Ce crabot **60** permet de désactiver les troisièmes moyens de couplage quel que soit l'état d'activation des autres moyens de couplage et quelles que soient les vitesses de rotation respectives du générateur de gaz **12,** de la turbine libre **14** et de la machine électrique réversible **30**.

Un intérêt du crabot **60** est d'assurer que, en vol, les troisièmes moyens de couplage sont effectivement désactivés. De ce fait, la deuxième valeur limite L2 n'a plus lieu d'être.

Par ailleurs, grâce à la présence de la troisième roue libre **52**, le crabotage et le décrabotage s'effectuent facilement car la première partie **62** du crabot, fixée à la roue libre **52**, n'oppose pas de couple résistant à la seconde partie **64** du crabot **60**. Le crabotage et le décrabotage se font donc à couple nul.

Selon une autre variante, moins avantageuse, on pourrait se dispenser de la troisième roue libre **54** en utilisant d'autres systèmes : de préférence un coupleur hydraulique ou un embrayage ou tout autre système convenant à cet effet.

**Revendications**

1. Turbomoteur (10), notamment pour un hélicoptère, comportant un générateur de gaz (12) et une turbine libre (14) entraînée en rotation par un flux de gaz (F) généré par le générateur de gaz, le turbomoteur comprenant en outre une machine électrique réversible (30) couplée au générateur de gaz, ladite machine électrique réversible étant arrangée pour mettre en rotation le générateur de gaz lors d'une phase de démarrage du turbomoteur, le turbomoteur étant **caractérisé en ce que** la machine électrique réversible est en outre couplée à la turbine libre (14) après la phase de démarrage du turbomoteur afin de générer de l'énergie électrique.

2. Turbomoteur selon la revendication **1**, **caractérisé en ce que** la machine électrique réversible (30) est couplée à un arbre (18) du générateur de gaz par l'intermédiaire de premiers moyens de couplage désactivables (32), **en ce que** ladite machine réversible (30) est couplée à un arbre de la turbine libre par l'intermédiaire de deuxièmes moyens de couplage désactivables (40), et **en ce que** les premiers et deuxièmes moyens de couplage sont configurés de manière à ne pas être activés simultanément.

3. Turbomoteur selon la revendication **2**, **caractérisé en ce que** les premiers et/ou les deuxièmes moyens de couplage (32, 40) comprennent une roue libre (34, 42).

4. Turbomoteur selon la revendication **3**, **caractérisé en ce que** les premiers moyens de couplage (30) comprennent une première roue libre (34), **en ce que** les deuxièmes moyens de couplage (32) comprennent une deuxième roue libre (42), et **en ce que** les première et deuxième roues libres (34, 42) sont montées en opposition.

5. Turbomoteur selon la revendication **3** ou **4**, **caractérisé en ce que** les premiers et/ou les deuxièmes moyens de couplage comprennent en outre un réducteur (36, 44).

6. Turbomoteur selon la revendication **5**, **caractérisé en ce que** les premiers moyens de couplage (32) comprennent un premier réducteur (36) ayant un premier coefficient de réduction (K1), tandis que les deuxièmes moyens de couplage (40) comprennent un deuxième réducteur (44) ayant un deuxième coefficient de réduction (K2), et **en ce que** le rapport des premier et deuxième coefficients de réduction est inférieur à une première valeur limite (L1).

7. Turbomoteur selon l'une quelconque des revendications **1** à **6**, **caractérisé en ce que** la machine électrique réversible (30) est également couplée au générateur de gaz (12) afin de générer de l'énergie électrique.

8. Turbomoteur selon les revendications **2** et **7**, **caractérisé en ce que** la machine électrique réversible (30) est couplée à l'arbre du générateur de gaz par des troisièmes moyens de couplage désactivables et **en ce que** les premiers, deuxièmes et troisièmes moyens de couplage sont configurés de manière que seul l'un desdits moyens de couplage soit activé à la fois.

9. Turbomoteur selon la revendication **8**, **caractérisé en ce que** les troisièmes moyens de couplage (50) comprennent une troisième roue libre (52).

10. Turbomoteur selon les revendications **3** et **9**, **caractérisé en ce que** les première et troisième roues libres (34, 52) sont montées en opposition.

11. Turbomoteur selon l'une quelconque des revendications **8** à **10**, **caractérisé en ce que** les troisièmes moyens de couplage (50) comportent en outre des moyens formant crabot (60).

12. Turbomoteur selon la revendication **6** et l'une quelconque des revendications **8** à **11**, **caractérisé en ce que** les troisièmes moyens de couplage (50) comportent en outre un troisième réducteur (54) ayant un troisième coefficient de réduction (K3) et **en ce que** le rapport des troisième et deuxième coefficients de réduction est supérieur à une seconde valeur limite (L2).

**Claims**

1. A turbine engine (10), in particular for a helicopter, the engine comprising a gas generator (12) and a free turbine (14) driven in rotation by a gas stream (F) generated by the gas generator, the turbine engine further including a reversible electric machine (30) for coupling to the gas generator, said reversible electric machine being suitable for setting the gas generator into rotation during a stage of starting the turbine engine, the turbine engine being **characterized in that** the reversible electric machine is also designed, in order to generate electricity, to be coupled to the free turbine (14) after the turbine engine has started.

2. A turbine engine according to claim 1, **characterized in that** the reversible electric machine (30) is coupled to a shaft (18) of the gas generator via first deactivatable coupling means (32), **in that** said reversible machine (30) is coupled to a shaft of the free turbine via second deactivatable coupling means (40), and **in that** the first and second coupling means are configured so as not to be activated simultaneously.

3. A turbine engine according to claim 2, **characterized in that** the first and/or second coupling means (32, 40) comprise freewheels (34, 42).

4. A turbine engine according to claim 3, **characterized in that** the first coupling means (30) comprise a first freewheel (34), **in that** the second coupling means (32) comprise a second freewheel (42), and **in that** the first and second freewheels (34, 42) are mounted in opposition.

5. A turbine engine according to claim 3 or claim 4, **characterized in that** the first and/or second coupling means further comprise stepdown gears (36, 44).

6. A turbine engine according to claim 5, **characterized in that** the first coupling means (32) comprise a first stepdown gear (36) having a first stepdown coefficient (K1), while the second coupling means (40) comprise a second stepdown gear (44) having a second stepdown coefficient (K2), and **in that** the ratio of the first and second stepdown coefficients is less than a first limit value (L1).

7. A turbine engine according to any one of claims 1 to 6, **characterized in that** the reversible electric machine (30) is also coupled to the gas generator (12) in order to generate electricity.

8. A turbine engine according to claims 2 and 7, **characterized in that** the reversible electric machine (30) is coupled to the shaft of the gas generator by third deactivatable coupling means, and **in that** the first, second, and third coupling means are configured in such a manner that only one of said coupling means is activated at a time.

9. A turbine engine according to claim 8, **characterized in that** the third coupling means (50) comprise a third freewheel (52).

10. A turbine engine according to claims 3 and 9, **characterized in that** the first and third freewheels (34, 52) are mounted in opposition.

11. A turbine engine according to any one of claims 8 to 10, **characterized in that** the third coupling means (50) further include dog-clutch forming means (60).

12. A turbine engine according to claim 6, and any one of claims 8 to 11, **characterized in that** the third coupling means (50) also include a third stepdown gear (54) having a third stepdown coefficient (K3), and **in that** the ratio of the second and third stepdown coefficients is greater than a second limit value (L2).

**Patentansprüche**

1. Turbomotor (10), insbesondere für einen Hubschrauber, umfassend einen Gasgenerator (12) und eine Freilaufturbine (14), die durch einen durch den Gasgenerator erzeugten Gasstrom (F) drehangetrieben wird, wobei der Turbomotor ferner eine reversible elektrische Maschine (30), die mit dem Gasgenerator gekoppelt ist, umfaßt, wobei die reversible elektrische Maschine dazu eingerichtet ist, den Gasgenerator während einer Startphase des Turbomotors in Rotation zu versetzen, wobei der Turbomotor **dadurch gekennzeichnet ist, daß** die reversible elektrische Maschine nach der Startphase des Turbomotors ferner mit der Freilaufturbine (14) gekoppelt wird, um elektrische Energie zu erzeugen.

2. Turbomotor nach Anspruch 1, **dadurch gekennzeichnet, daß** die reversible elektrische Maschine (30) über deaktivierbare erste Kopplungsmittel (32) mit einer Welle (18) des Gasgenerators gekoppelt ist, daß die reversible Maschine (30) über deaktivierbare zweite Kopplungsmittel (40) mit einer Welle der Freilaufturbine gekoppelt ist und daß die ersten und zweiten Kopplungsmittel derart ausgebildet sind, daß sie nicht gleichzeitig aktiviert werden.

3. Turbomotor nach Anspruch 2, **dadurch gekennzeichnet, daß** die ersten und/oder die zweiten Kopplungsmittel (32, 40) einen Freilauf (34, 42) umfassen.

4. Turbomotor nach Anspruch 3, **dadurch gekennzeichnet, daß** die ersten Kopplungsmittel (30) einen ersten Freilauf (34) umfassen, daß die zweiten Kopplungsmittel (32) einen zweiten Freilauf (42) umfassen und daß der erste und der zweite Freilauf (34, 42) gegenläufig angebracht ist.

5. Turbomotor nach Anspruch 3 oder 4, **dadurch gekennzeichnet, daß** die ersten und/oder die zweiten Kopplungsmittel ferner ein Untersetzungsgetriebe (36, 44) umfassen.

6. Turbomotor nach Anspruch 5, **dadurch gekennzeichnet, daß** die ersten Kopplungsmittel (32) ein erstes Untersetzungsgetriebe (36), das einen ersten Reduktionskoeffizienten (K1) aufweist, umfassen, während die zweiten Kopplungsmittel (40) ein zweites Untersetzungsgetriebe (44), das einen zweiten Reduktionskoeffizienten (K2) aufweist, umfassen und daß das Verhältnis des ersten und des zweiten Reduktionskoeffizienten kleiner als ein erster Grenzwert (L1) ist.

7. Turbomotor nach einem der Ansprüche 1 bis 6, **dadurch gekennzeichnet, daß** die reversible elektrische Maschine (30) auch mit dem Gasgenerator (12) gekoppelt ist, um elektrische Energie zu erzeugen.

8. Turbomotor nach den Ansprüchen 2 und 7, **dadurch gekennzeichnet, daß** die reversible elektrische Maschine (30) über deaktivierbare dritte Kopplungsmittel mit der Welle des Gasgenerators gekoppelt ist und daß die ersten, zweiten und dritten Kopplungsmittel derart ausgebildet sind, daß lediglich eines der Kopplungsmittel auf einmal aktiviert wird.

9. Turbomotor nach Anspruch 8, **dadurch gekennzeichnet, daß** die dritten Kopplungsmittel (50) einen dritten Freilauf (52) umfassen.

10. Turbomotor nach den Ansprüchen 3 und 9, **dadurch gekennzeichnet, daß** der erste und der dritte Freilauf (34, 52) gegenläufig angebracht sind.

11. Turbomotor nach einem der Ansprüche 8 bis 10, **dadurch gekennzeichnet, daß** die dritten Kopplungsmittel (50) ferner eine Klauenkupplung bildende Mittel (60) umfassen.

12. Turbomotor nach Anspruch 6 und einem der Ansprüche 8 bis 11, **dadurch gekennzeichnet, daß** die dritten Kopplungsmittel (50) ferner ein drittes Untersetzungsgetriebe (54), das einen dritten Reduktionskoeffizienten (K3) aufweist, umfassen und daß das Verhältnis des dritten und des zweiten Reduktionskoeffizienten größer als ein zweiter Grenzwert (L2) ist.

FIG.1

FIG.2

FIG.3

FIG.4

**RÉFÉRENCES CITÉES DANS LA DESCRIPTION**

**Documents brevets cités dans la description**

- US 20050056021 A
- EP 1712761 A